Europäisches Patentamt

**European Patent Office**

**Office européen des brevets**

(11) Publication number: **0 060 725**
A2

# (12) EUROPEAN PATENT APPLICATION

(21) Application number: **82301349.5**

(22) Date of filing: **16.03.82**

(51) Int. Cl.³: **F 16 C 33/20,** F 16 C 17/03

(30) Priority: **18.03.81 GB 8108414**

(43) Date of publication of application: **22.09.82**
**Bulletin 82/38**

(84) Designated Contracting States: **DE FR GB IT**

(71) Applicant: **AE PLC, Cawston House Cawston, Rugby Warwickshire CV22 7SA (GB)**

(72) Inventor: **Davies, Glyndwr John, 14 The Avenue, Cowley Uxbridge Middlesex (GB)**

(74) Representative: **Rees, David Christopher et al, Kilburn & Strode 30 John Street, London WC1N 2DD (GB)**

(54) Plain bearing and method of making same.

(57) A plain bearing, for example a pad for a tilting pad bearing, comprising a steel backing, an aluminium bronze layer sprayed on to the backing, and a plastics bearing layer applied to the aluminium bronze. The plastics bearing material can be polytetrafluoroethylene, polyphenylene sulphide or polyetheretherketone.

EP 0 060 725 A2

# PLAIN BEARING AND METHOD
## OF MAKING SAME

The present invention relates to plain bearings and more particularly to the application of a bearing layer of a plastics material to a metal backing, for example, in the form of a pad for a tilting pad bearing.

While white metal can be made to bond to steel without difficulty, plastics materials such as polytetrafluoroethylene, (PTFE), polyphenylene sulphide (PPS), and polyetheretherketone (PEEK), have generally required a bonding layer. This bonding layer has in the past consisted of a layer of sintered tin or lead-bronze powder to which the plastics material is bonded. However, tin and lead-bronze both tend to oxidise when heated in air and since heating is necessary to melt the plastics material to effect curing and bonding to the backing, oxidation takes place which tends to reduce the strength of the bond.

Furthermore, the application of bronze powder to a substrate and its subsequent sintering can be an expensive process.

It is an object of the present invention to provide an improved method of manufacturing a plain bearing having a metal substrate and a plastics bearing layer.

It is a further object to provide such a bearing having an improved bond between the plastics material and the metal backing.

According to the present invention a method for bonding a plastics bearing material to a metal substrate is characterised in that it comprises spraying a layer of aluminium bronze on to the bronze layer and heating the substrate and aluminium bronze layer to a temperature sufficient to melt the plastics material.

A suitable temperature might be about 370°C.

Sprayed aluminium bronze has the advantage that it may provide a good mechanical and chemical key throughout the aluminium oxide surface of aluminium bronze and it is stable at the preheat temperature, aluminium bronze being very oxidation resistant.

It may also be possible to provide a layer of plastics material of very closely controlled thickness which is crucial in ensuring the correct degree of cure in the polymer. Since oxygen from the air is required for adequate cure, any region in a single coating thicker than about 0.5mm may be inadequately cured. Beneath this level, the oxygen catalysed cure reaction may be too remote from the air interface to prevent brittleness or even blistering in the uncured polymer in the latter high temperature part of the curing cycle.

The aluminium bronze layer is preferably brought into contact with a level layer of the required plastics material thereby transferring and bonding to the aluminium bronze a level lining of plastic material. Preferably, the level layer of plastics powder material is laid on a flat steel sheet. There should be sufficient powder present so that there is no tendency for molten plastics material to adhere to the steel sheet. There may be a thin layer of unmelted powder left on the cold steel sheet after the transfer has taken place, though preferably all the powder is transferred.

The plastics material may be PTFE, a polyarylene sulphide such as PPS, or PEEK. In the case of PPS the material may be in the form of a powder and may be caused to melt by contact with the heated substrate so that it is transferred to the heated substrate in a molten condition. Alternatively, the plastics material may be in the form of a strip in which case local melting may take place adjacent the heated aluminium bronze layer, again enabling bonding to occur on cooling. The means of bonding is preferably chemical and mechanical keying and the surface of the aluminium bronze may therefore have a surface roughness. Preferably this roughness can be defined as being a minimum of $350\mu$ " ($9 \times 10^{-3}$mm). CLA (Centre line average) with stylus of .0001" ($2.5 \times 10^{-3}$mm) diameter.

In another embodiment, aluminium bronze powder is sprayed on to the substrate while it is moving. In this case the plastics lining is preferably applied by placing a layer of powder on to the top surface of the aluminium bronze having previously heated the metal strip and the aluminium bronze layer, since it may be less convenient to apply a strip of plastics material.

In yet another embodiment of the invention the aluminium bronze may have softer metal additions, such as tin, lead and zinc. This may therefore provide not only a bonding layer but a conformable layer which would suffice as a bearing material if the plastics lining were removed.

It may also be possible to bond the plastics material to a curved surface, for example the bearing surface of a

4.

pad for a tilting pad journal bearing. This may be achieved by spraying the curved surface of a suitable bearing blank with an aluminium bronze layer and spreading plastics powder as a flat layer to the desired thickness on a metal foil. The foil with its bronze layer is then preferably bent round a mandrel having a suitable diameter and the heated blank is lowered on to the curved powder layer. When the blank is removed, the powder is preferably all transferred to the blank and this may then be cured.

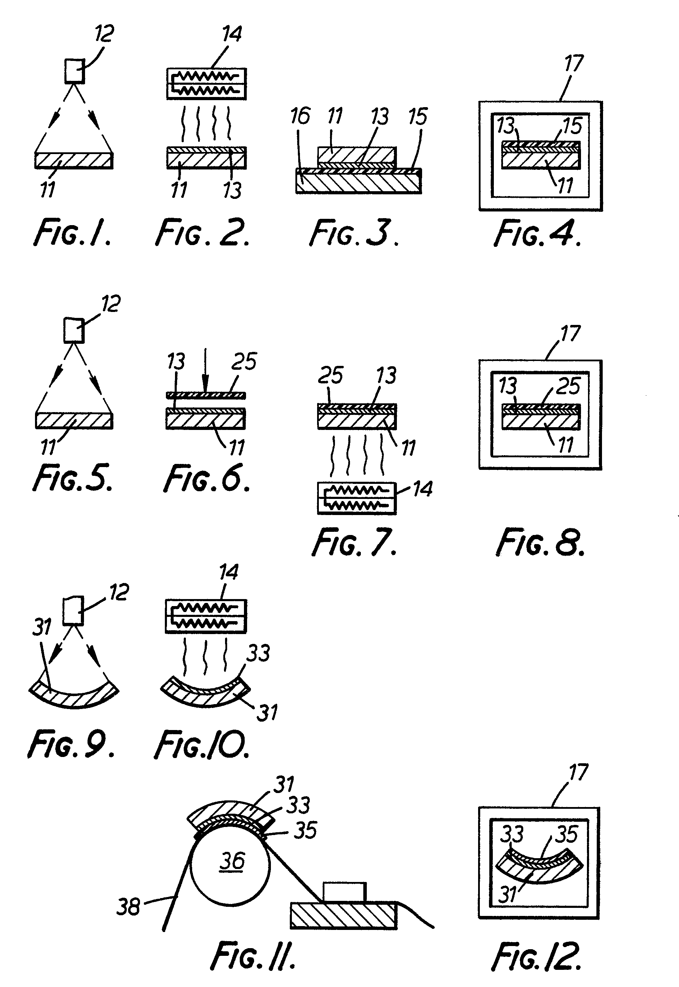

The invention may be carried into practice in various ways and three general methods in accordance with the invention will now be described by way of example with reference to the accompanying drawings in which Figures 1 to 4, Figures 5 to 8 and Figures 9 and 12 show respectively in diagrammatic form the stages in three methods in accordance with the invention.

Referring to Figures 1 to 4, a steel washer is sprayed with aluminium bronze by means of a spray nozzle 12. The washer 11 having a layer of aluminium bronze 13 is then heated by means of a heater 14 and, while still hot, is placed, aluminium bronze side down, onto a flat steel plate 16 covered with an even layer 15 of the plastics bearing material in powder form. Alternatively, the layer 15 could be a sheet. The washer 11 and aluminium bronze layer 13 are then removed, together with a layer of the plastics bearing material adhering to the aluminium bronze and in this form the coated washer 11, 13, 15 is placed in an oven 17 where curing takes place.

The method shown in Figures 5 to 8 is similar except that a flat sheet 25 of the plastics bearing material is placed on the aluminium bronze layer 13 and the coated washer 11, 13, 25 is heated to make the layer 25 adhere prior to being placed in the oven 17.

Figures 9 to 12 show the coating of a pad 31 for a tilting pad journal bearing. The first two stages shown in Figures 9 and 10 are similar to those shown in Figures 1 and 2, with the pad 31 being sprayed with a layer 33 of aluminium bronze onto its concave bearing surface. Since it is easy to spread a layer of powder on a flat metal plate to very close tolerance, before coating curved surfaces, the powder layer 35 is again spread on a flat surface (not shown), but with a thin 0.2mm sheet 38 of metal foil laying on the flat reference plate, i.e. between it and the powder layer. The powder spreading die holds the foil accurately against the flat backing plate so a very even powder layer is obtained.

In order to transfer this powder layer 35 to the concave surface of the heated tilting pad journal bearing blank 31 the metal foil 38 with its layer 35 of powder is bent over a horizontal cylindrical mandrel 36 of the required geometry to match the diameter of the journal bearing blank. Thus, a layer 35 is bent to about a $75^{\circ}$ arc of approximately the same or slightly smaller radius than the aluminium bronze sprayed surface 33 of the journal bearing blank 31. It has been found that curvatures down to below half an inch (12mm) radius can be produced without the powder layer falling off over the required $75^{\circ}$ arc on top of the mandrel. Radii of curvature of above half an inch (12mm) give little trouble from disturbance of the powder layer on bending.

The hot journal bearing blank 31 is lowered onto the powder layer 35 for a few seconds and then lifted off carrying with it all of the powder layer 35 as in the case of flat blanks.  The layer is then cured.as usual.

Three specific embodiments will now be described in the accompanying examples.

Example 1

A batch. of cast steel tilting pad thrust washer blanks were fabricated by investment casting.

The pads were shot blasted on the flat bearing face with G24 chilled iron grit.

Immediately after shot blasting the pads were mounted in a rotating jig and arc sprayed with aluminium bronze such that the gun distance was 200mm from the pads and the speed of the pads under the cone of the gun was 3 metres per minute, laying down about 0.25mm of coating. The aluminium bronze was 11 SWG wire of composition 90% Cu, 9% Al, 1% Fe.

An even uniform layer of polyphenylene sulphide powder 1.7mm thick was layered on a flat steel sheet by means of a simple powder spreading die incorporating a vibrating weir blade, in preparation for transfer coating onto the sprayed surface of the pads.

The pads were mounted six at a time in jigs and placed in an air circulating oven maintained at 360°C.

After 30 minutes heating the hot jigged pads were removed from the oven and quickly and carefully laid, sprayed face down, onto the uniformly spread layer of PPS for 5 to 10 seconds before returning them to the oven for cure.

During the 5 to 10 seconds when the hot pads were laying on the powder layer, the polymer melted under each pad with the exception of a very thin film adjacent to the supporting steel strip which was kept below the melting point of PPS, approx. $290^{o}$C, by the proximity of the steel heat sink. Thus, on lifting the pad from the steel sheet all of the even PPS layer was left adhering to the pad, the thin film of unmelted powder ensuring that no sticking of melted polymer to the steel could occur.

After transfer coating, the linings were cured by heating the pads for two hours at $370^{o}$C.

Inspection showed the pads to be of consistent quality with a flat even coating of PPS strongly bonded to the coast steel pad with no porosity or areas of variable bond.

The coated pads were then finish machined to the drawing dimensions.

Example 2.

A batch of investment cast steel tilting pad thrust washers were spray coated with aluminium bronze as described in Example 1.

The pads were placed in an air circulating oven at $420^{o}$C for 30 minutes.

A flat stainless steel strip 40cm x 10cm was coated with an even layer 2mm thick, of the polymer polyetheretherketone in the form of a -44 BS mesh powder, as
described in Example 1.

The hot pads were quickly withdrawn from the oven
and placed bronze side down onto the spread powder layer.
The hot pads were close packed onto the surface of the
powder covered steel strip in this manner.

One minutes was allowed to elapse after the last
hot pad had been laid in place, to allow the heat from
the pad to conduct to the powder below it, then the whole
assembly was fed into a rolling mill which compressed
the hot polymer between the sprayed bronze surface of the
pad and stainless steel backing strip.

After rolling, the pads were found to lift easily
from the stainless steel backing strip leaving a compact
polymer coating adhering to the sprayed bronze surface
of the pad.  The pads were then returned to an oven and
reheated at 380°C for ten minutes to anneal the lining.
After cooling the pads were inspected and found to have
a tenaciously bonded, homogeneous lining of void free
polyetheretherketone.

The coated pads were then finish machined to the
drawing dimensions.

Example 3

A batch of steel tilting pad journal blanks with an
internal diameter of 38mm were shot blasted on the con-
cave bearing face with G24 chilled iron grit.

Immediately after shot blasting the blanks were arc
sprayed with aluminium bronze such that the gun distance
was 200mm from the pads and the speed of the pads under

# 0060725

the cone of the gun was 3m/min, laying down about 0.25mm of coating. The aluminium bronze was 11 SWG wire of composition 90% copper, 9% aluminium, 1% iron.

An even uniform layer of polyphenylene sulphide powder 1.7mm thick was laid on a flat steel sheet covered by 0.2mm thick copper foil, by means of a simple powder spreading die incorporating a vibrating weir blade in preparation for transfer coating onto the sprayed concave surface of the blanks.

The foil with its spread layer of PPS was carefully slid over a cylindrical steel mandrel of diameter 1.4 inches (35.6mm) held horizontally. The foil was carefully bent to conform to the mandrel profile over the top approximately $75^{\circ}$ arc, being held in place by means of a weight on each end. This produced a convexly curved even layer of powder ready to transfer to the heated blanks.

The blanks were placed in an air circulating oven maintained at $360^{\circ}$C. After 30 minutes heating the hot pads were removed from the oven and quickly and carefully laid sprayed face down onto the curved spread layer of PPS for 5-10 seconds, before returning them to the oven for cure.

During the 5 to 10 seconds when the hot blanks were laying on the powder layer the polymer melted under each pad with the exception of a very thin film immediately adjacent to the supporting copper foil which was kept below the melting point of the PPS (approx. $290^{\circ}$C.) by the proximity of the steel heat sink. Thus on lifting the pad from the foil all of the even PPS layer was left adhering to the pad, the thin film of unmelted powder ensuring that no sticking of melted polymer to the steel sheet could occur.

After transfer coating the linings were cured by heating the blanks for 2 hours at 370°C..

Inspection showed the blanks to be of consistent quality with an even coating of PPS strongly bonded to the steel blank with no porosity or areas of variable bond.

The coated blanks were then cut axially to produce ten tilting pad journal bearings from each blank and finish machined to the drawing dimensions.

## CLAIMS

1.   A method for bonding a plastics bearing material to a metal substrate characterised by spraying a layer of aluminium bronze (13) on to the substrate (11), applying the plastics material (15) to the aluminium bronze layer (13), and heating the substrate (11) and the aluminium bronze layer (13) to a temperature sufficient to melt the plastics material (15).

2.   A method as claimed in Claim 1 characterised in that aluminium bronze powder is sprayed on to the substrate while the substrate is moving.

3.   A method as claimed in Claim 1 or Claim 2 characterised in that the aluminium bronze layer also includes a soft metal addition.

4.   A method as claimed in Claim 1 or Claim 2 or Claim 3 characterised in that the substrate and aluminium bronze layer is heated, and the aluminium bronze layer is then brought into contact with a level layer of the plastics material, thereby causing the plastics material to adhere to the aluminium bronze layer.

5.   A method as claimed in Claim 1 or Claim 2 or Claim 3 characterised in that the plastics material is applied to the aluminium bronze layer in the form of a sheet (25).

6.   A method as claimed in Claim 1 or Claim 2 or Claim 3 characterised in that the substrate (31), having a curved surface on to which the aluminium bronze layer (33) has been sprayed, and the aluminium bronze layer (33) is heated, an even layer of the plastics material (35) in powder form is spread on to a flat metal foil (38), the foil and powder layer are then bent around a mandrel (36) and the aluminium bronze layer is brought into contact with the layer of the plastics material thereby causing the plastics material to adhere to the aluminium bronze layer.

7.   A plain bearing comprising a steel substrate and a plastics material bearing layer characterised by an aluminium bronze layer on the substrate and in that the layer of plastics material is bonded to the aluminium bronze.

8.   A bearing as claimed in Claim 7, characterised in that the aluminium bronze layer includes a soft metal addition.

1/1

0060725

Fig.1.  Fig.2.  Fig.3.  Fig.4.

Fig.5.  Fig.6.  Fig.7.  Fig.8.

Fig.9.  Fig.10.

Fig.11.  Fig.12.